(19) Europäisches Patentamt
European Patent Office
Office européen des brevets

(11) **EP 2 522 963 A1**

(12) **EUROPEAN PATENT APPLICATION**
published in accordance with Art. 153(4) EPC

(43) Date of publication:
**14.11.2012 Bulletin 2012/46**

(51) Int Cl.:
***G01F 1/66*** *(2006.01)*

(21) Application number: **11731764.4**

(22) Date of filing: **06.01.2011**

(86) International application number:
**PCT/JP2011/000028**

(87) International publication number:
**WO 2011/083766 (14.07.2011 Gazette 2011/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.01.2010 JP 2010001686**

(71) Applicant: **Panasonic Corporation
Kadoma-shi
Osaka 571-8501 (JP)**

(72) Inventors:
• **WATANABE, Aoi
Chuo-ku, Osaka 540-6207 (JP)**

• **FUJII, Yuji
Chuo-ku, Osaka 540-6207 (JP)**
• **NAKABAYASHI, Yuji
Chuo-ku, Osaka 540-6207 (JP)**
• **GOTOU, Hirokazu
Chuo-ku, Osaka 540-6207 (JP)**

(74) Representative: **Schwabe - Sandmair - Marx
Patentanwälte
Stuntzstraße 16
81677 München (DE)**

(54) **ULTRASONIC FLOWMETER**

(57)     It is an objective to correct an error in true propagation time attributable to changes in a received waveform caused by variations in characteristics of ultrasonic transducers and a temperature change, to thus enhance accuracy of measurement of an ultrasonic flowmeter.

An ultrasonic flowmeter includes a pair of ultrasonic transducers 2 and 7 capable of receiving and transmitting an ultrasonic signal; a propagation time measurement block 5 for measuring a propagation time elapsed before an ultrasonic wave transmitted from the ultrasonic transducer 2 arrives at the ultrasonic transducer 7; a control block 4 for determining a flow volume from the propagation time; correction calculation means for calculating a correction value that takes into account variations in characteristics of the ultrasonic transducers, a delay between transmission of an ultrasonic wave from the transmission-side ultrasonic transducer and commencement of measurement of a propagation time, a delay between arrival of the ultrasonic wave at the receiving-side ultrasonic transducer and detection of the ultrasonic wave by a receipt detection circuit, and a difference between the measured propagation time and a true propagation time resultant from combination of a received wave with a reflected wave; and correction value selection means 10 for selecting a correction value conforming to the propagation time from the correction value calculated by the correction value calculation means; and a propagation time correction block 11 for correcting a propagation time.

*FIG. 1*

**Description**

Technical Field

The present invention relates to an ultrasonic flowmeter that measures a propagation time of ultrasonic waves by use of a pair of transmittable/receivable ultrasonic transducers, thereby measuring a flow volume of a measurement target fluid.

Background Art

Under an ultrasonic wave propagation time measurement method used in a related-art ultrasonic flowmeter, a pair of transmittable/receivable ultrasonic transducers are placed opposite each other. One of the ultrasonic transducers is driven by means of a burst signal, thereby transmitting ultrasonic waves. The other ultrasonic transducer receives the ultrasonic waves, to thus measure a propagation time of the ultrasonic waves (see; for instance, Patent Document 1). Fig. 3 is a block diagram of the related-art ultrasonic flowmeter. Fig. 4 shows a driving waveform of the transmission-side ultrasonic transducer and a receive waveform received by the receiving-side ultrasonic transducer.

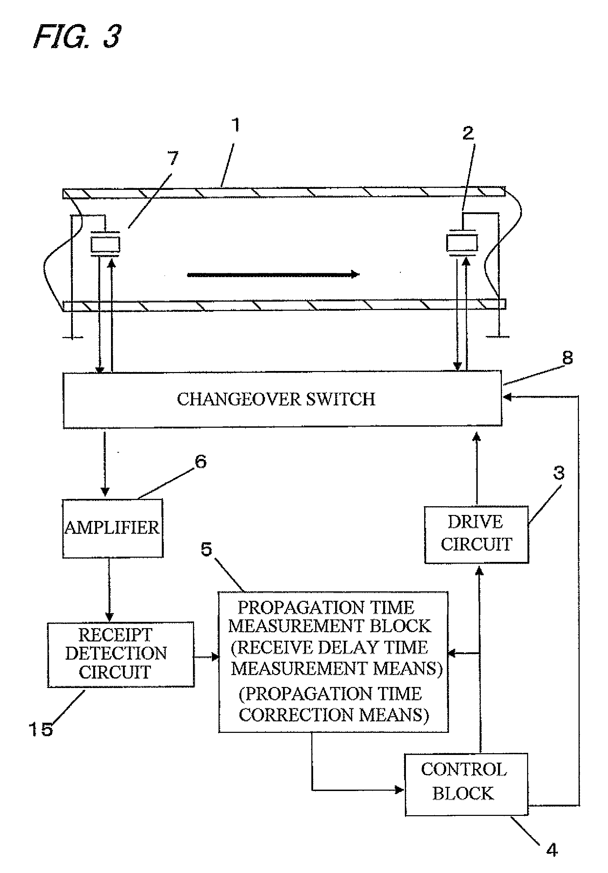

As shown in Fig. 3, a related-art ultrasonic flowmeter is made up of an ultrasonic transducer 2 disposed in a measurement flow path 1 through which a fluid flows; a drive circuit 3 for driving the ultrasonic transducer 2; a control block 4 that outputs a start signal to the drive circuit 3; a propagation time measurement block 5 for measuring a propagation time of ultrasonic waves; an ultrasonic transducer 7 for receiving ultrasonic waves transmitted from the ultrasonic transducer 2; an amplifier 6 for amplifying an output of the ultrasonic transducer 7; and a receipt detection circuit 15 that compares the output of the amplifier 6 with a reference voltage and that deactivates the propagation time measurement block 5 when a magnitude relation is inverted. Since a propagation time reciprocal difference method is used so that temperature influence on acoustic velocity can be ignored, a common ultrasonic flowmeter is equipped with a change-over switch 8 so as to be able to measure a propagation time of ultrasonic waves traveling from an upstream position to a downstream position of the measurement flow path 1 and a propagation time of ultrasonic waves traveling from the downstream position to the upstream position.

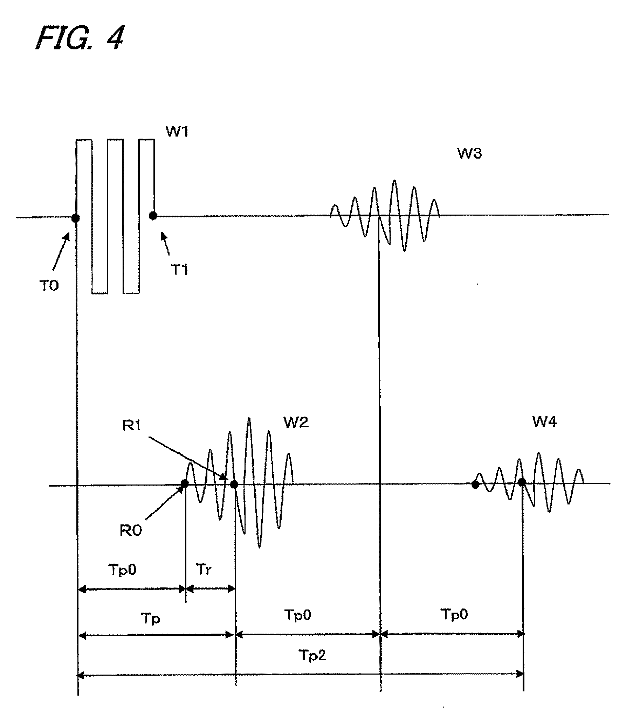

The measurement method is now described by reference to Fig. 4.

In Fig. 4, a horizontal axis represents time; a vertical axis represents a voltage; reference symbol T0 designates a start time point of a drive waveform W1; and reference symbol T1 designates an end time point of a third wave achieved after commencement of driving operation. Reference symbol R0 designates a receiving start time point, and R1 designates an end time point of a third wave achieved after commencement of receiving operation. As above, a propagation time of ultrasonic waves can be measured by means of taking a zero-crossing point T1 of the $m^{th}$ (m= 3) wave of the driving waveform as a starting point and taking the $m^{th}$ (m = 3) wave of an electric signal received by a remaining ultrasonic wave transmitting/receiving device as an end point R1. A flow rate of a fluid is measured by use of the propagation time, whereby a flow volume is calculated.

Specifically, since the receiving start time point R0 cannot be detected with high accuracy, the starting time point T0 of the drive waveform W1 and the receiving start time point R0 can be indirectly measured by utilization of the end point R1 of the $m^{th}$ wave.

In order to attain further improvements in accuracy, a reflected wave is actually received to thereby enhance measurement accuracy. The principle of improvement of measurement accuracy is described hereunder.

Receive delay time measurement means provided in the propagation time measurement block 5 measures a time Tp elapsed from when a transmission-side ultrasonic transducer transmits ultrasonic waves by means of a driving waveform W1 until when a receiving-side ultrasonic transducer receives a first received waveform W2. Next, the measurement means measures a time Tp2 elapsed from when the receiving-side ultrasonic transducer and the transmission-side ultrasonic transducer each reflect the ultrasonic waves once until when the receiving-side ultrasonic transducer receives a second receive waveform W4. In other words, the ultrasonic waves reflected by the receiving-side ultrasonic transducer arrives as a waveform W3 at the transmission-side ultrasonic transducer. The ultrasonic waveform further undergoes reflection on the transmission-side ultrasonic transducer, thereupon arriving as a receive waveform W4 at the receiving-side ultrasonic transducer. If the arrival of the ultrasonic waveform is taken as a second receipt of the waveform, a true propagation time Tp0 unsusceptible to a shape of a received waveform, or the like, can be determined by the following equation (Eq. 1). Thus, it is possible to prevent deterioration of measurement accuracy due to an error in true propagation time, which would otherwise be caused when a receive waveform is changed by variations in characteristic of the ultrasonic transducer, a temperature change, or a waveform reflected by the measurement flow path.

$$Tp0 = (Tp2 - Tp)/2 \ldots (Eq.\ 1)$$

Citation List

Patent Literature

PTL1: JP-A-2005-172556

Summary of Invention

Technical Problem

However, in the related-art configuration, measurement is continually performed each time until reflected waveforms are generated. Hence, there are problems; namely, an increase in current consumption, the impossibility of performance of accurate measurement because of a shape of a receive waveform being distorted by reflection, and complication of measurement software.

The present invention solves the problems of the related art and aims at providing an ultrasonic flowmeter that exhibits improved measurement accuracy and accomplishes lower current consumption by measuring for each propagation time a correction value for a difference between a true propagation time and a measured propagation time.

Solution to Problem

In order to solve the aforementioned problems of the conventional apparatus, an ultrasonic flowmeter according to the present invention includes, a measurement flow path through which a measurement target fluid flows; a pair of ultrasonic transducers that are placed in the measurement flow path and that can transmit and receive an ultrasonic signal; a propagation time measurement block for measuring a propagation time elapsed before the ultrasonic signal transmitted from one of the pair of ultrasonic transducers arrives at the other ultrasonic transducer after propagating through a measurement target fluid; a propagation time correction block for correcting the propagation time measured by the propagation time measurement block, to thus calculate a corrected propagation time; and a control block for calculating a flow volume of the measurement target fluid from the corrected propagation time, wherein the propagation time correction block has correction value calculation means for calculating a correction value used for correcting the propagation time measured by the propagation time measurement block from a true propagation time previously measured under predetermined conditions.

Even when a receive waveform is changed by variations in ultrasonic transducer, a temperature change, or the like, a correction value for each of propagation times is calculated from a previously-measured true propagation time. Therefore, an accurate propagation time can be measured at all times. Advantageous Effects of Invention

The ultrasonic flowmeter of the present invention can calculate an accurate propagation time of ultrasonic waves at all times without being affected by variations in ultrasonic transducer, a temperature change, or waves reflected from an interior of a flow path. Accordingly, an ultrasonic flowmeter with extremely high precision involving lower current consumption can be implemented.

Brief Description of Drawings

[Fig. 1] It is a block diagram of an ultrasonic flowmeter of a first embodiment of the present invention.
[Fig. 2] It is a block diagram of an ultrasonic flowmeter of a second embodiment of the present invention.
[Fig. 3] It is a block diagram of a related-art ultrasonic flowmeter.
[Fig. 4] It is a chart of transmission and receive waveforms of the ultrasonic flowmeter.

Description of Embodiments

A first invention includes a measurement flow path through which a measurement target fluid flows; a pair of ultrasonic transducers that are placed in the measurement flow path and that can transmit and receive an ultrasonic signal; a propagation time measurement block for measuring a propagation time elapsed before the ultrasonic signal transmitted from one of the pair of ultrasonic transducers arrives at the other ultrasonic transducer after propagating through a measurement target fluid; a propagation time correction block for correcting the propagation time measured by the propagation time measurement block, to thus calculate a corrected propagation time; and a control block for calculating a flow volume of the measurement target fluid from the corrected propagation time, wherein the propagation time correction block has correction value calculation means for calculating a correction value used for correcting the propagation time measured by the propagation time measurement block from a true propagation time previously measured under predetermined conditions, whereby the flow volume can be calculated from the true propagation time, and measurement accuracy of anultrasonic flow meter can be enhanced.

A second invention includes a measurement flow path through which a measurement target fluid flows; a pair of ultrasonic transducers that are placed in the measurement flow path and that can transmit and receive an ultrasonic signal; a propagation time measurement block for measuring a propagation time elapsed before the ultrasonic signal transmitted from one of the pair of ultrasonic transducers arrives at the other ultrasonic transducer after propagating through a measurement target fluid; a propagation time correction block for correcting the propagation time measured by the propagation time measurement block, to thus calculate a corrected propagation time; and a control block for calculating a flow volume of the measurement target fluid from the corrected propagation time, wherein the propagation time correction block has correction value calculation means for calculating for each propagation time a correction value used for correcting the propagation time measured by the propagation time measurement block from a true propagation time previously measured under predetermined conditions, storage means for storing a correction value calculated by the correction value calculation means, and correction value selection means for selecting from correction values stored in the storage means a correction value suitable for the propagation time measured by the propagation time measurement block, whereby the flow volume can be calculated from the true propagation time and measurement accuracy of an ultrasonic flow meter can be enhanced.

In a third invention based on the first or second invention, the measurement fluid target is a gas; and the correction value calculation means is configured so as to calculate a relationship at an arbitrary temperature between a propagation time and a correction value from a true propagation time that has been measured by changing a temperature while a kind of gas is kept constant as a predetermined condition. As a result, a correction value at each propagation time acquired when the kind of gas is fixed can be calculated, so that a correction can be made for each temperature. Even when a change has occurred in temperature, the measurement accuracy of the ultrasonic flowmeter can be enhanced.

In a fourth invention based particularly on the first or second invention, the measurement fluid target is a gas; and the correction value calculation means is configured so as to calculate a relationship for an arbitrary kind of gas between a propagation time and a correction value from a true propagation time that has been measured by changing a kind of gas while a temperature is kept constant as a predetermined condition. As a result, a correction value for each propagation time achieved when the temperature is fixed can be calculated, so that a correction can be made for each kind of gas. Even when a change has occurred in temperature, the measurement accuracy of the ultrasonic flowmeter can be enhanced.

In a fifth invention based particularly on any one of the first through fourth inventions, the correction value calculation means calculates a correction value when the flow volume of the measurement target fluid is zero. The correction value is calculated at timing when there is no flow volume, whereby current consumption can be diminished.

Embodiments of the present invention are hereunder described by reference to the drawings. The present invention, however, shall not be limited to the embodiments.

(First Embodiment)

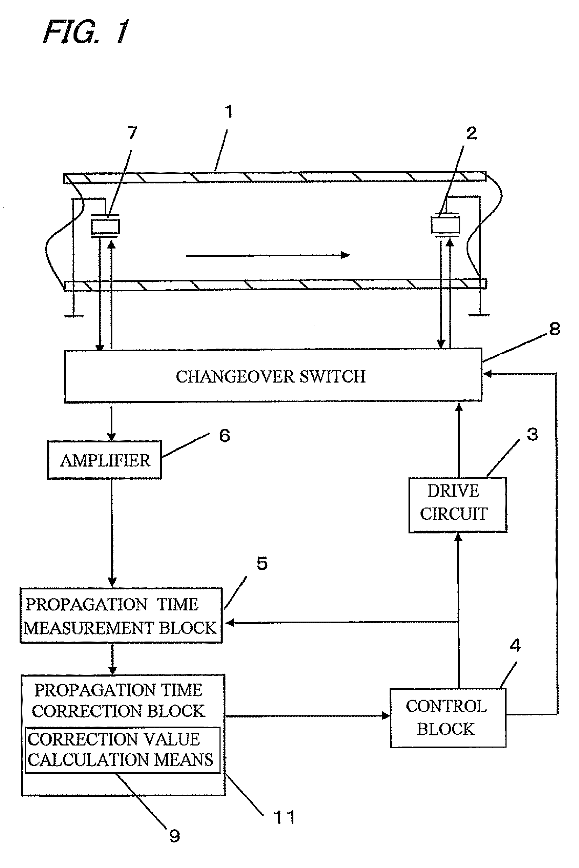

Fig. 1 shows a block diagram of an ultrasonic flowmeter of a first embodiment of the present invention.

As shown in Fig. 1, the ultrasonic flowmeter of the present embodiment is made up of ultrasonic transducers 2 and 7 disposed in a measurement flow path 1 through which a fluid is to flow; a drive circuit 3 for driving the ultrasonic transducers 2 and 7; a control block 4 for outputting a start signal to the drive circuit 3; a propagation time measurement block 5 for measuring a propagation time of ultrasonic waves; a propagation time correction block 11 for making a correction to a propagation time; an amplifier 6 for amplifying outputs from the ultrasonic transducers 2 and 7; and a changeover switch 8 for switching transmission/reception between the upstream ultrasonic transducer 7 and the downstream ultrasonic transducer 2. In the ultrasonic flowmeter, the changeover switch 8 switches one of the ultrasonic transducers 2 and 7 to a transmission side and a remaining one to a receiving side, thereby making it possible to measure a propagation time elapsed from when the ultrasonic transducer 2 transmits ultrasonic waves until when the ultrasonic transducer 7 receives the ultrasonic waves and a propagation time elapsed from when the ultrasonic transducer 7 transmits ultrasonic waves until when the ultrasonic transducer 2 receives the ultrasonic waves. The propagation time correction block 11 is equipped with correction value calculation means 9 that calculates an appropriate correction value according to a temperature and a kind of gas. The propagation time correction block 11 is configured so as to calculate a corrected propagation time determined by making a correction to the propagation time measured by the propagation time measurement block 5 by use of a correction value calculated by the correction value calculation means 9.

Working and operation of the above-configured ultrasonic flowmeter are now described.

First, the correction value calculation means 9 that calculates an appropriate correction value according to a kind of gas that is a measurement target fluid is configured so as to be able to calculate for each propagation time a correction value taking into account variations in characteristics of the ultrasonic transducers, a delay between transmission of ultrasonic waves from the transmission-side ultrasonic transducer and commencement of measurement of a propagation time, a delay between arrival of ultrasonic waves at the receiving-side ultrasonic transducer and detection of the ultrasonic waves performed by a receipt detection circuit, and a difference between the measured propagation time and a true propagation time resultant from combination of a received wave with a reflected wave. The correction value calculation means 9 calculates a correction value from a propagation time acquired through actual measurement of a flow rate and makes a correction to the propagation time measured by the propagation time measurement block 5, thereby calculating a true propagation time.

Incidentally, it is also possible for the correction value calculation means 9 to obtain beforehand a computing equation that enables calculation of a correction value from a relationship between a true propagation time measured under the method using (Eq. 1) described in connection with the related art and a propagation time Tp0 shown in Fig. 4. This prevents measurement of a reflected wave during ordinary measurement. Further, it is possible to calculate a correction value for the propagation time Tp0 by measuring a propagation time T0 and a corrected propagation time.

As above, the present embodiment is equipped with the propagation time correction block 11 that makes a correction to a propagation time by means of the correction value calculation means 9 calculating a correction value from the propagation time measured by the propagation time measurement block 5. It is thereby possible to make corrections to variations in characteristics of the ultrasonic transducers, a delay between transmission of ultrasonic waves from the transmission-side ultrasonic transducer and commencement of measurement of a propagation time, a delay between arrival of ultrasonic waves at the receiving-side ultrasonic transducer and detection of the ultrasonic waves performed by a receipt detection circuit, and influence resultant from combination of a received wave with a reflected wave.

(Second Embodiment)

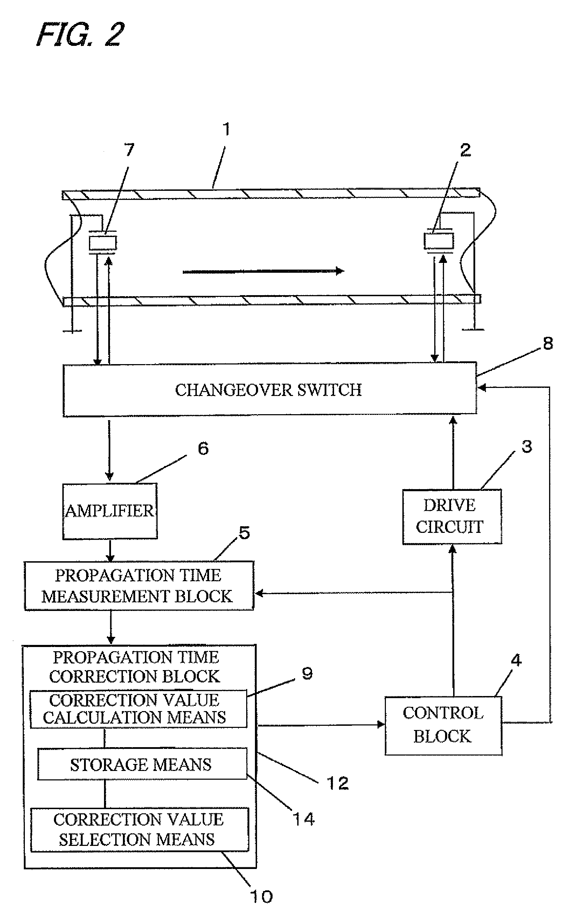

Fig. 2 shows a block diagram of an ultrasonic flowmeter of a second embodiment of the present invention.

In Fig. 2, the present embodiment is similar to the first embodiment in terms of a basic configuration. Differences between the embodiments lie in that a propagation time correction block 12 has the correction value calculation means 9 that calculates an appropriate correction value according to a temperature, a kind of gas, or the like; storage means 14 for storing the correction value calculated by the correction value calculation means 9; and correction value selection means 10 for selecting a correction value suitable for a propagation time from among correction values stored in the storage means 14 and that a correction is made to the propagation time by use of the selected correction value.

Working and operation of the above-configured ultrasonic flowmeter are hereunder described.

First, the correction value calculation means 9 that calculates an appropriate correction value according to a kind of gas calculates for each propagation time a correction value taking into account variations in characteristics of the ultrasonic transducers, a delay between transmission of ultrasonic waves from the transmission-side ultrasonic transducer and commencement of measurement of a propagation time, a delay between arrival of ultrasonic waves at the receiving-side ultrasonic transducer and detection of the ultrasonic waves performed by a receipt detection circuit, and a difference between the measured propagation time and a true propagation time resultant from combination of a received wave with a reflected wave; and then stores the thus-calculated correction value into the storage means 14. The correction value selection means 10 selects a suitable correction value in accordance with a propagation time measured when a flow volume measurement has been actually performed and makes a correction to the propagation time, thereby calculating a true propagation time.

Meanwhile, the correction value calculation means 9 can also be arranged so as to calculate a correction value from a relationship between a true propagation time measured by the method using (Eq. 1) described in connection with the related art and the propagation time Tp0 shown in Fig. 4. Further, the storage means 14 can also be arranged so as to store the correction value for each propagation time. The correction value selection means 10 can be arranged so as to select a correction value in accordance with a measured propagation time. As a result, measurement of a reflected waveform is thereby prevented during ordinary measurement. It is possible to select a correction value for the propagation time T0 and calculate a corrected propagation time by measuring a propagation time TOp.

As above, in the present embodiment, the propagation time correction block 12 has the correction value calculation means 9 for calculating a correction value to be made on a propagation time and the correction value selection means 10 for selecting a correction value conforming to the propagation time measured by the propagation time measurement block 5. It is thereby possible to make corrections to variations in characteristics of the ultrasonic transducers, a delay between transmission of ultrasonic waves from the transmission-side ultrasonic transducer and commencement of measurement of a propagation time, a delay between arrival of ultrasonic waves at the receiving-side ultrasonic transducer and detection of the ultrasonic waves performed by a receipt detection circuit, and influence, such as that resulting from combination of a received wave with a reflected wave.

The correction value calculation means 9 is also set so as to calculate a correction value when there is no flow, so that measurement accuracy can be enhanced with low power consumption.

If the correction value calculation means 9 is configured so as to calculate a relationship between a temperature and a correction value by means of fixing a kind of gas and changing a temperature at two or more points, a correction will be made at each temperature. Therefore, even when a temperature change occurs, the measurement accuracy of the ultrasonic flowmeter can be enhanced.

If the correction value calculation means 9 is configured so as to calculate a relationship between a kind of gas and a correction value by fixing a temperature and changing a kind of gas, the measurement accuracy of the ultrasonic flowmeter can be enhanced even when a change occurs in the kind of gas.

This invention is intended to contain, as a range to be protected, various changes and applications performed by those skilled in the art based on the description of the specification and well known techniques without departing from the gist and range of this invention. Further, the constituent elements of the aforesaid embodiments may be arbitrarily combined within a range not departing from this invention.

This invention is based on Japanese Patent Application (Japanese Patent Application No. 2010-001686) filed on January 7, 2010, the content of which is incorporated herein by preference.

Industrial Applicability

As above, since the ultrasonic flowmeter of the preset invention makes a correction at each propagation time, there is obviated a necessity to take into account characteristics of the ultrasonic transducers and influence of a reflected wave. Since an accurate propagation time of ultrasonic waves can be measured at all times, an extremely highly accurate ultrasonic flowmeter can be implemented. Therefore, the present invention can be applied to use applications, like a flow measurement standard, a gas meter, and a water meter.

Reference Signs List

1 MEASUREMENT FLOW PATH
2, 7 ULTRASONIC TRANSDUCER
5 PROPAGATION TIME MEASUREMENT BLOCK
9 CORRECTION VALUE CALCULATION MEANS
10 CORRECTION VALUE SELECTION MEANS
11 PROPAGATION TIME CORRECTION BLOCK
12 PROPAGATION TIME CORRECTION BLOCK
14 STORAGE MEANS

**Claims**

1. An ultrasonic flowmeter, comprising
   a measurement flow path through which a measurement target fluid flows;
   a pair of ultrasonic transducers that are placed in the measurement flow path and that can transmit and receive an ultrasonic signal;
   a propagation time measurement block for measuring a propagation time elapsed before the ultrasonic signal transmitted from one of the pair of ultrasonic transducers arrives at the other ultrasonic transducer after propagating through a measurement target fluid;
   a propagation time correction block for correcting the propagation time measured by the propagation time measurement block, to thus calculate a corrected propagation time; and
   a control block for calculating a flow volume of the measurement target fluid from the corrected propagation time, wherein
   the propagation time correction block has correction value calculation means for calculating a correction value used for correcting the propagation time measured by the propagation time measurement block from a true propagation time previously measured under predetermined conditions.

2. An ultrasonic flowmeter, comprising
a measurement flow path through which a measurement target fluid flows;
a pair of ultrasonic transducers that are placed in the measurement flow path and that can transmit and receive an ultrasonic signal;
a propagation time measurement block for measuring a propagation time elapsed before the ultrasonic signal transmitted from one of the pair of ultrasonic transducers arrives at the other ultrasonic transducer after propagating through a measurement target fluid;
a propagation time correction block for correcting the propagation time measured by the propagation time measurement block, to thus calculate a corrected propagation time; and
a control block for calculating a flow volume of the measurement target fluid from the corrected propagation time, wherein
the propagation time correction block has correction value calculation means for calculating for each propagation time a correction value used for correcting the propagation time measured by the propagation time measurement block from a true propagation time previously measured under predetermined conditions, storage means for storing a correction value calculated by the correction value calculation means, and correction value selection means for selecting from correction values stored in the storage means a correction value suitable for the propagation time measured by the propagation time measurement block.

3. An ultrasonic flowmeter according to claim 1 or 2, wherein
the measurement fluid target is a gas; and
the correction value calculation means is configured so as to calculate a relationship at an arbitrary temperature between a propagation time and a correction value from a true propagation time that has been measured by changing a temperature while a kind of gas is kept constant as a predetermined condition.

4. An ultrasonic flowmeter according to claim 1 or 2, wherein
the measurement fluid target is a gas; and the correction value calculation means is configured so as to calculate a relationship for an arbitrary kind of gas between a propagation time and a correction value from a true propagation time that has been measured by changing a a kind of gas while a temperature is kept constant as a predetermined condition.

5. An ultrasonic flowmeter according to any one of claims 1 to 4, wherein
the correction value calculation means calculates a correction value when the flow volume of the measurement target fluid is zero.

# FIG. 1

## FIG. 2

CHANGEOVER SWITCH

AMPLIFIER

DRIVE CIRCUIT

PROPAGATION TIME MEASUREMENT BLOCK

PROPAGATION TIME CORRECTION BLOCK

CORRECTION VALUE CALCULATION MEANS

STORAGE MEANS

CORRECTION VALUE SELECTION MEANS

CONTROL BLOCK

# FIG. 3

CHANGEOVER SWITCH

AMPLIFIER

DRIVE CIRCUIT

RECEIPT DETECTION CIRCUIT

PROPAGATION TIME MEASUREMENT BLOCK (RECEIVE DELAY TIME MEASUREMENT MEANS) (PROPAGATION TIME CORRECTION MEANS)

CONTROL BLOCK

FIG. 4

| | INTERNATIONAL SEARCH REPORT | International application No. |
|---|---|---|
| | | PCT/JP2011/000028 |

**A. CLASSIFICATION OF SUBJECT MATTER**
*G01F1/66*(2006.01)i

According to International Patent Classification (IPC) or to both national classification and IPC

**B. FIELDS SEARCHED**

Minimum documentation searched (classification system followed by classification symbols)
G01F1/66

Documentation searched other than minimum documentation to the extent that such documents are included in the fields searched

| Jitsuyo Shinan Koho | 1922–1996 | Jitsuyo Shinan Toroku Koho | 1996–2011 |
|---|---|---|---|
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-164465 A (Ricoh Elemex Corp.), 17 July 2008 (17.07.2008), paragraphs [0034] to [0060]; fig. 17 (Family: none) | 1-5 |
| Y | JP 2005-172556 A (Matsushita Electric Industrial Co., Ltd.), 30 June 2005 (30.06.2005), paragraphs [0022] to [0024]; fig. 2 (Family: none) | 1-5 |
| Y | JP 2001-255186 A (Matsushita Electric Industrial Co., Ltd.), 21 September 2001 (21.09.2001), paragraphs [0015] to [0017] (Family: none) | 4 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 March, 2011 (02.03.11) | 15 March, 2011 (15.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

12

**EP 2 522 963 A1**

**INTERNATIONAL SEARCH REPORT**

International application No.

PCT/JP2011/000028

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-180566 A (Matsushita Electric Industrial Co., Ltd.), 07 August 2008 (07.08.2008), paragraphs [0062] to [0064] (Family: none) | 5 |

Form PCT/ISA/210 (continuation of second sheet) (July 2009)

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005172556 A

- JP 2010001686 A